# EUROPÄISCHE PATENTSCHRIFT

(11) **EP 0 890 028 B1**
(45) Veröffentlichungstag und Bekanntmachung des Hinweises auf die Patenterteilung: **28.05.2003**
(21) Anmeldenummer: 97908229.4
(22) Anmeldetag: 13.03.1997
(51) Int. Cl.: F15B 15/22

(54) **VERFAHREN ZUM BETREIBEN EINER WERKZEUGMASCHINE**
MACHINE TOOL OPERATING METHOD
PROCEDE PERMETTANT DE FAIRE FONCTIONNER UNE MACHINE-OUTIL

(30) Priorität: 02.04.1996 DE 19613128
(43) Veröffentlichungstag der Anmeldung: 13.01.1999
(73) Patentinhaber: CHIRON-WERKE GMBH & CO. KG, 78532 Tuttlingen (DE)
(72) Erfinder: GRUND, Peter, D-78647 Trossingen (DE)
(74) Vertreter: Otten, Hajo, Dr.-Ing.
(86) Internationale Anmeldenummer: EP9701274
(87) Internationale Veröffentlichungsnummer: WO97037138

(56) Entgegenhaltungen:
- EP-A- 0 654 608
- DE-A- 4 201 464
- DE-C- 4 410 103

## Beschreibung

Die vorliegende Erfindung betrifft ein Verfahren zum Betreiben oder Ansteuern einer Werkzeugmaschine, die eine Vorrichtung aufweist, die durch eine mediumsbetätigte Kolbenvorrichtung betätigt wird, die zwischen zwei Endpositionen einen durch Endanschläge begrenzten Hub ausführt und mit einem Abtriebsglied zur Übertragung des Hubes auf die zu betätigende Vorrichtung verbunden ist.

Derartige Vorrichtungen sind an allen modernen Werkzeugmaschinen vorhanden, zu ihnen gehören z.B. als Drehtisch ausgebildete Werkstücktische oder Werkzeugwechselvorrichtungen.

Bei vielen Werkzeugmaschinen ist der Werkstücktisch in eine Bearbeitungsseite sowie in eine Bestückungsseite aufgeteilt, wobei auf der Bearbeitungsseite ein erstes Werkstück bearbeitet werden kann, während auf der Bestückungsseite ein zweites, noch zu bearbeitendes Werkstück gerade eingespannt wird. Bearbeitungsseite und Bestückungsseite sind dabei häufig durch eine sogenannte Spritzschutzwand voneinander getrennt, um die Bedienungsperson vor herumfliegenden Spänen und herumspritzendem Bchrwasserzu schützen.

Der Spindsistock der Werkzeugmaschine sowie der Werkstücktisch führen zum Werkstückwechsel a eine Relativbewegung zueinander durch, bsi der Bearbeitungsseite und Bestückungsseite miteinander vertauscht werden.

Eine Möglichkeit, diesen Werkstückwechsel durchzuführen, besteht darin, den eingangs erwähnten Drehtisch zu verwenden. Derartige Drehtische werden häufig dann eingesetzt, wenn die damit aufgebaute Werkzeugmaschine einen möglichst geringen Platzbedarf aufweisen soll.

Zum Werkstückwechsel wird der Werkstücktisch durch den Verdrehantrieb abwechselnd um ± 180° verdreht, wobei der Werkstücktisch in seinen Endstellungen z.B. durch eine Hirth-verzalmung positioniert ist. Soll der Werkstücktisch verdreht werden, so wird er zunächst aus der Hirth-Verzahnung ausgehoben, bevor eine Zahnstange dann von ihrer einen Endlage in die andere geschoben wird, wobei sie ein Zahnradteil und über dieses den Werkstücktisch in die jeweils andere Endstellung verdreht. Nach dem Ende dieser Drehbewegung wird der Werkstücktisch wieder auf die Hirth-Verzahnung abgesenkt.

Der Verstellantrieb zum Verschieben der Zahnstange arbeitet in der Regel mit Druckluft, wobei in der Kolbenvorrichtung die beiden Stirnflächen der Zahnstange als Schubseiten eines doppeltmediumsbetätigten Schubkolbens wirken. Am Ende ihres jeweiligen Hubes läuft die Zahnstange mit der jeweils nicht mit Druckluft beaufschlagten Stirnseite gegen einen Anschlag, so daß der Hub in beiden Richtungen durch Anschläge begrenzt ist.

Das allgemeine Bestreben in der Maschinenbauindustrie geht dahin, nicht nur den Werkzeugwechsel sondern auch den Werkstückwechsel in immer kürzeren Zeitabständen durchzuführen, so daß das Verdrehen des Werkstücktisches in möglichst kurzer Zeit erfolgen soll. Eine sehr schnelle Drehung des Werkstücktisches bedeutet jedoch, daß die Zahnstange mit einer hohen Geschwindigkeit gegen die Anschläge läuft, so daß es zu harten Stößen und Erschütterungen kommt. Derartige Stöße und Erschütterungen sind jedoch im Hinblick auf die Aufspannung der Werkstücke von Nachteil, da es durch diese Erschütterungen zu einer Dejustierung der Werkstückaufspannungen kommen kann, so daß die Reproduzierbarkeit der Bearbeitung beeinträchtigt wird.

Weiterhin ist zu bedenken, daß der Werkstücktisch mit den aufgespannten Vorrichtungen eine sehr große Masse auf weist, so daß bei einer entsprechenden Drehgeschwindigkeit in den Endlagen der Zahnstange eine relativ hohe Drehenergie vernichtet werden muß. Bei der bekannten Werkzeugmaschine sind hierfür Stoßdämpfer vorgesehen, die sich an den Anschlägen nach außen von der Zahnstange weg erstrecken und mit ihren Kolben auf die Stirnseiten der Zahnstange zuweisen. Wegen der hohen zu vernichtenden Drehenergie sind diese Stoßdämpfer sehr ausladend, so daß sie insgesamt zu einer großen Baubreite der bekannten Werkzeugmaschine beitragen.

Allgemein geht das Bestreben bei derartigen Werkzeugmaschinen dahin, möglichst klein bauende Werkzeugmaschinen bereitzustellen, die einen möglichst schnellen Werkstückwechsel ohne Rückwirkungen auf die Arbeitsgenauigkeit der Werkzeugmaschine ermöglichen.

Ähnliche Probleme treten auch bei den eingangs bereits erwähnten Werkzeugwechselvorrichtungen auf. Auch hier soll der Hub der zur Betätigung als Kolbenvorrichtung vorgesehenen Kolbenzylinder-Einheit sowie die damit einhergehende Bewegung der entsprechenden Teile der bewegten Vorrichtung in möglichst kurzer Zeit erfolgen. Eine derartige, sehr schnelle Bewegung bedeutet jedoch auch hier, daß der Kolben mit einer hohen Geschwindigkeit gegen die Anschläge läuft, so daß es zu harten Stößen oder Erschütterungen kommt. Derartige Stöße und Erschütterungen sind auch hier im Hinblick auf die Arbeitsgenauigkeit der Werkzeugmaschine von Nachteil, da es durch diese Erschütterungen zu Dejustierungen kommen kann, so daß die Reproduzierbarkeit der Bearbeitung beeinträchtigt wird.

Allgemein muß beim Betrieb der Kolben-Zylinder-Einheiten immer ein Kompromiß zwischen der erzielten Hubgeschwindigkeit des Kolbens sowie den sich daraus ergebenden Bewegungsenergien gefunden werden, die durch Endanschläge und ggf. Stoßdämpfer vernichtet werden müssen.

Insbesondere tauchen Probleme auf, wenn die Vorrichtung eine Werkzeugwechselvorrichtung ist. Derartige Werkzeugwechselvorrichtungen dienen dazu, die bei einer derartigen Werkzeugmaschine verwendeten Werkzeuge zwischen einer Magazinstellung und einer Arbeitsstellung an der Spindel zu überführen, sie ermöglichen, also in an sich bekannter Weise einen automatischen Werkzeugwechsel. Die Werkzeugwechselvorrichtungen umfassen dabei z.B. Parallelogrammführungen oder andere Gelenkhebel, die durch die Kolben-Zylinder-Einheiten bewegt werden. Dabei kommen sehr unterschiedliche Werkzeuge zum Einsatz, die unterschiedlich schwer sind. Zum einen ist es bier bekannt, die Werkzeugwechselvorrichtungen mit einer Standardgeschwindigkeit zu betreiben, wobei dann die Geschwindigkeit so gewählt wird, daß auch bei den schwersten Werkzeugen noch eine hinreichende Dämpfung der Bewegungsabläufe möglich ist. Dies bedeutet jedoch andererseits, daß die leichteren Werkzeuge nicht so schnell bewegt werden, wie dies möglich wäre.

Andererseits kann auch mit zwei unterschiedlichen Geschwindigkeiten gearbeitet werden, so daß die leichteren Werkzeuge schneller bewegt werden als die schwereren. Dies bedeutet jedoch, daß durch aufwendige Programmierung oder sonstige Werkzeugerkennungen dafür Sorge getragen werden muß, daß die Werkzeugwechselvorrichtung jeweils mit der "richtigen" Geschwindigkeit angesteuert wird.

Gerade die Werkzeugwechselgeschwindigkeit bestimmt jedoch maßgeblich die Bearbeitungsgeschwindigkeit der Werkzeugmaschinen, wobei hier bereits Zeitvorteile im Bereich von 1/10 Sekunde Verbesserungen darstellen, deren wirtschaftliche und technische Bedeutung enorm sind.

In diesem Zusammenhang ist es aus der CK-Z: "technica" 25/26/1980, Seiten 2315-2318 bekannt, einen doppelt-mediumsbetätigten Kolben zu verwenden, der über ein 5/2-Wege-Ventil hin- und hergef ahren wird, wobei durch gezieltes Entlüften der jeweils anderen Druckkammer ein Bremsdruck aufgebaut wird.

Die DE 39 24 335 A1 offenbart eine Werkzeugmaschine mit einem Drehtisch, der über einen Hydraulikantrieb von einer ersten in eine zweite Position gedreht wird. Der Hydraulikantrieb beschleunigt den Drehtisch von der ersten Position in eine Umschaltposition mit einer im wesentlichen konstanten Kraft. Ab Erreichen der Umschaltposition wird eine entgegengesetzte Kraft gleicher Größe aufgebracht, um den Drehtisch abzubremsen. Hierzu wird der Hydraulikantrieb mit dem gleichen Druck, aber in entgegengesetzter Richtung, betrieben.

Die Beschleunigung erfolgt so lange wie möglich, wobei die entgegengesetzte Kraft dann so lange wirkt, bis der Drehtisch in seiner zweiten Endposition zum Stillstand kommt, wobei ein Anschlag vorgesehen ist, gegen den der Drehtisch läuft. Ist dieser Anschlag erreicht, wird wieder auf die beschleunigende Kraft umgeschaltet, um den Drehtisch in dieser zweiten Endposition zu halten.

Der Hydraulikantrieb umfaßt hier einen hydraulisch betriebenen Rotationsmotor mit einer Welle und einem Ritzel, das mit einem Zahnrad an dem Drehtisch in Eingriff ist.

Aus der EP 0 654 608 A1 ist ein Verfahren zum Steuern der Bewegung eines Druckmittelzylinders bekannt, bei dem ein Kolben zunächst mit Hilfe eines Druckmittels in einer Richtung beschleunigt wird. Zeitabhängig kann dann eine Gegenbelüftung ausgelöst werden, wodurch der Kolben vor Erreichen seiner Endposition abgebremst wird. Nach Ablauf einer weiteren Zeitspanne kann dann überprüft werden, ob der Kolben seine vorgesehene Endposition auch tatsächlich erreicht hat, und wenn dies nicht der Fall ist, wird der Kolben noch weiter in die gewünschte Richtung bewegt. Alternativ zu dem zweiten Teil des bekannten Verfahrens schlägt die EP 0 654 608 A1 vor, beim Abbremsen des Kolbens dessen Geschwindigkeit zu ermitteln und in Abhängigkeit davon gegebenenfalls den Bremsvorgang zu unterbrechen.

Aus der DE 44 10 103 C1 ist ein Antrieb der fluidischen Bauart bekannt. Um ein sanftes Anfahren des Kolbens an die Endlage zu erzielen, wird vorgeschlagen, daß die Steuerung ein Gegenpulsmodul umfaßt, das über einen zumindest einer Bewegungsrichtung zugeordneten Vorpositioniersensor eine zeitlich einstellbare Umsteuerung bewirkt. Während der Umsteuerung wird der Kolben mit einem Gegendruck beaufschlagt und abgebremst. Anschließend wird der Kolben wieder in der ursprünglichen Richtung angetrieben, um ein sicheres Anlegen an die Endlage zu gewährleisten.

Die beiden zuletzt genannten Druckschriften lassen das Einsatzgebiet des jeweils beschriebenen Kolbens offen. Ein konkreter Bezug zu den vorstehend beschriebenen Problemen beim Betreiben oder Ansteuern von Werkzeugmaschinen ist nicht enthalten.

Es hat sich jetzt gezeigt, daß alle insoweit beschriebenen Konstruktionen bzw. Verfahren zu deren Betreiben entweder den Nachteil aufweisen, daß beim Abbremsen der betätigten Vorrichtung starke Erschütterungen auftreten, die sich nachteilig auf die Arbeitsgenauigkeit der Werkzeugmaschine auswirken, oder daß aber die erreichbaren Hubgeschwindigkeiten noch nicht ausreichend sind, um z.B. einen schnellen Werkstück- oder Werkzeugwechsel zu erreichen.

Vor diesem Hintergrund ist es Aufgabe der vorliegenden Erfindung, ein Verfahren der eingangs genannten Art zu schaffen, mit dem eine noch schnellere Betätigung der jeweiligen Vorrichtung auf einfache Weise möglich wird, ohne daß die mit dieser Vorrichtung ausgerüstete Werkzeugmaschine in ihrer Arbeitsgenauigkeit beeinträchtigt wird.

Bei dem eingangs genannten Verfahren wird diese Aufgabe gelöst durch die Schritte:
a) Eine erste Stirnseite der Kolbenvorrichtung wird so lange mit einem Betätigungsmedium beaufschlagt, bis die Vorrichtung eine erste Umschaltposition erreicht hat,
b) danach wird eine der ersten Stirnseite entgegenwirkende zweite Stirnseite so lange mit dem Betätigungsmedium beaufschlagt, bis die Vorrichtung eine zweite Umschaltposition eingenommen hat, wobei die Kolbenvorrichtung zwar weiter verfährt, jedoch mit langsamer werdender Geschwindigkeit, und
c) dann wird wieder die erste Stirnseite mit dem Betätigungsmedium beaufschlagt, um die Vorrichtung in eine ihrer Endpositionen zu bringen,
wobei die zweite Umschaltposition dynamisch dadurch bestimmt wird, daß ab Erreichen der ersten Umschaltposition eine Zeitspanne abgewartet wird, bevor wieder die erste Stirnseite mit dem Betätigungsmedium beaufschlagt wird, und
wobei die erste Zeitspanne vorgegeben ist und 10 - 15 % der für den gesamten Hub benötigten Zeit beträgt.

Die der Erfindung zugrunde liegende Aufgabe wird auf diese Weise vollkommen gelöst.

Der Erfinder der vorliegenden Anmeldung hat nämlich erkannt, daß zum einen durch das aktive Bremsen ab der ersten Umschaltposition für das Beschleunigen zum Verlassen der ersten Endposition ein höherer Druck als bisher eingesetzt werden kann, da die Bewegungsenergie nicht mehr allein nur durch Stoßdämpfer und/oder Anschläge vernichtet wird, sondern bereits während eines Abschnittes des Bewegungsvorganges durch gezieltes Gegenbelüften teilweise vernichtet wird.

Nun wird aber die Vorrichtung nicht bis in die Endposition hinein abgebremst, sondern bei Erreichen der zweiten Umschaltposition noch einmal beschleunigt. Gegenüber dem gezielten Abbremsen bis in die zweite Endposition hinein ist hier von Vorteil, daß die Vorrichtung mit einer zulässigen Bewegungsenergie in die zweite Endposition verfährt, wo diese Bewegungsenergie dann durch Stoßdämpfer und/oder reine Endanschläge absorbiert wird.

Durch die Wahl der Lage der ersten und zweiten Umschaltposition kann jetzt ein optimaler Kompromiß zwischen schnellem Verfahren und geringen Stößen gewählt werden. Insbesondere ist es durch das erfindungsgemäße Verfahren jetzt möglich, die betätigte Vorrichtung in Abhängigkeit von ihrer jeweiligen Masse optimal anzusteuern.

Die zweite Umschaltposition wird hier dynamisch dadurch bestimmt, daß ab Erreichen der ersten Umschaltposition eine Zeitspanne, T1, abgewartet wird, bevor wieder die erste Stirnseite mit dem Betätigungsmedium beaufschlagt wird.

Hier ist von Vorteil, daß sich das Verfahren sozusagen selbst an unterschiedliche Lastzustände anpaßt. Wenn z.B. der Drehtisch mit einem schwereren Werkstück beladen ist, also insgesamt schwerer ist, dreht er sich bei gleicher Beschleunigungskraft langsamer, wodurch auch seine Geschwindigkeit beim Bremsen früher wieder abnimmt. Er kann/muß dann also weiter von der zweiten Endposition entfernt wieder beschleunigt werden, damit eine möglichst geringe Verfahrzeit erreicht wird.

Dabei ist es weiter vorgesehen, daß die erste Zeitspanne vorgegeben ist und vorzugsweise ca. 10 - 15 % der für den gesamten Hub benötigten Zeit beträgt.

Hier ist von Vorteil, daß insbesondere durch eine Kombination mit einer rein durch die Wegstrecke vorgegebenen ersten Umschaltposition und einer durch die Zeit vorgegebenen zweiten Umschaltposition ein sehr einfaches Verfahren bereitgestellt wird, das sich an unterschiedliche Lastzustände bei der betätigten Vorrichtung sozusagen dynamisch anpaßt. Je nach der Masse der betätigten Vorrichtung hat diese nämlich bei Erreichen der ersten Umschaltposition eine unterschiedliche Geschwindigkeit, wobei durch das Abbremsen über eine konstante Zeit dann in Abhängigkeit von der jeweiligen Geschwindigkeit ein unterschiedlicher Weg zurückgelegt wird. Das bedeutet jedoch, daß die zweite Umschaltposition bei einer schwereren, also sich langsamer bewegenden Vorrichtung weiter von der Endposition entfernt ist als es bei einer sich schnell bewegenden Vorrichtung der Fall ist. Damit steht aber für eine sich langsamer bewegende Vorrichtung noch eine größere Zeitspanne und Strecke für die zweite Beschleunigung in die Endposition hinein zur Verfügung, als es bei einer leichteren Vorrichtung der Fall ist. Es ist leicht zu erkennen, daß insbesondere durch dieses Ausführungsbeispiel ein einfaches und adaptives Verfahren bereitgestellt wird, das einerseits für eine schnelle Bewegung und andererseits für geringe Erschütterungen sorgt.

Dabei ist es bevorzugt, wenn die erste Umschaltposition zwischen 50 und 75 %, vorzugsweise bei ca. 2/3 des Hubes liegt.

Der Erfinder der vorliegenden Anmeldung hat erkannt, daß insbesondere bei Drehtischen diese Festlegung der ersten und/oder zweiten Umschaltposition für viele verschiedene Lastzustände zu einem optimalen Kompromiß zwischen Geschwindigkeit und Erschütterungen führt. Hier ist von Vorteil, daß die beiden Umschaltpositionen wegmäßig festgelegt werden können, so daß eine sehr einfache Steuerung möglich ist.

Alternativ ist es bevorzugt, wenn auch die erste Umschaltposition dynamisch aus der Zeit berechnet wird, die die Vorrichtung benötigt, um eine Zwischenposition zwischen der anfänglichen Endposition und der ersten Umschaltposition zu erreichen, wobei die Zwischenposition vorzugsweise zwischen 40 und 60 %, weiter vorzugsweise bei ca. 55 % des Hubes liegt.

Hier ist von Vorteil, daß eine sich langsamer bewegende weil schwerere Vorrichtung schon während des ersten Verfahrensschrittes länger in Richtung auf die andere Endposition hin beschleunigt wird. Wenn sich z.B. der Drehtisch wegen einer hohen Masse langsamer dreht, da z.B. auch höhere Reibungskräfte überwunden werden müssen, so kann er auch später zum erstenmal abgebremst werden. Durch diese Maßnahme ergibt sich also eine noch bessere Anpassung an unterschiedliche Lastzustände bei der zu betätigenden Vorrichtung.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der beigefügten Zeichnung dargestellt und werden in der nachfolgenden Beschreibung näher erläutert. Es zeigen:
- Fig. 1: einen schematischen Ausschnitt einer zur Durchführung des neuen Verfahrens geeigneten Werkzeugmaschine, die eine durch eine Kolbenvorrichtung betätigte Werkzeugwechselvorrichtung aufweist;
- Fig. 2: in einer schematischen Darstellung die Kolbezworrichtung aus Fig. 1 in einem Längsschnitt;
- Fig. 3a und 3b: schematische Diagramme, die das erfindungsgemäße Verfahren verdeutlichen; und
- Fig. 4: in einer Darstellung wie Fig. 2 ein zweites Ausführungsbeispiel der Kolbenvorrichtung.

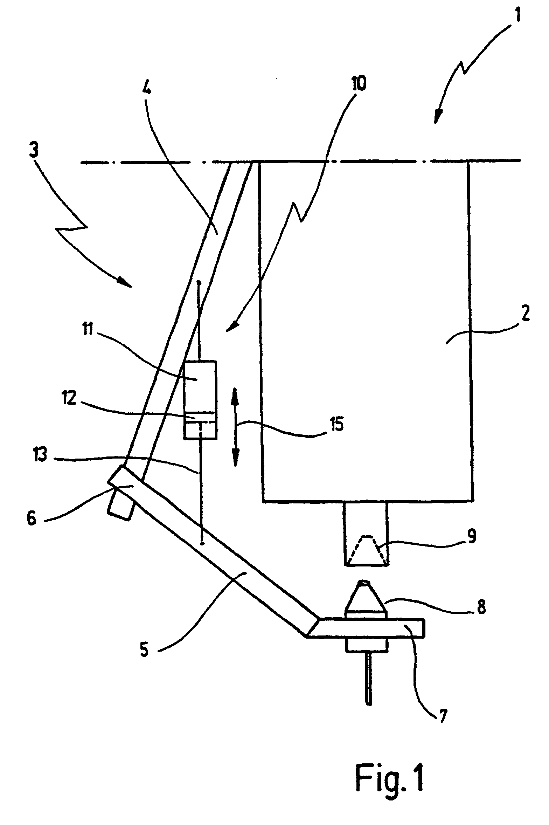

In Fig. 1 ist mit 1 eine lediglich schematisch und im Ausschnitt angedeutete Werkzeugmaschine bezeichnet, die einen schematisch angedeuteten Spindelstock 2 umfaßt. Neben dem Spindelstock 2 ist eine an sich bekannte Vorrichtung 3 zum Werkzeugwechsel angeordnet, deren oberer Arm 4 in nicht dargestellter Weise hohenverschiebbar an der Werkzeugmaschine 1 befestigt ist. Die Vorrichtung 3 weist einen unteren Arm 5 auf, der an einem Drehgelenk 6 verschwenkbar an dem oberen Arm 4 angelenkt ist. Der untere Arm 5 endet in einer Greiferhand 7, die ein Werkzeug 8 trägt, das mit einem Steilkegel eines Werkzeughalters in eine werkzeugaufnahme 9 an dem Spindelstock 2 einsetzbar ist.

Zwischen dem oberen Arm 4 und dem unteren Arm 5 ist eine Kolbenvorrichtung 10 angeordnet, die zur Betätigung der Vorrichtung 3 dient. Die Kolbenvorrichtung 10 umfaßt einen in einem Gehäuse 11 geführten, doppelt wirkenden, mediumsbetätigten Kolben 12, der über ein Abtriebsglied 13 mit dem unteren Arm 5 verbunden ist. Das Gehäuse 11 selbst ist mit dem oberen Arm 4 verbunden.

In Abhängigkeit von der Beaufschlagung mit Betätigungsmedium führt der Kolben 12 einen bei 15 angedeuteten Hub aus, über den der untere Arm 5 auf den oberen Arm 4 zu oder von diesem weg geschwenkt wird. Um Kollisionen mit dem Spindelstock 2 zu vermeiden, kann auch der obere Arm 4 in geeigneter Weise geschwenkt werden. Andererseits ist es auch möglich, eine an sich bekannte Parallelogrammführung zu verwenden, durch die die Greiferhand 7 automatisch aus dem Bereich des Spindelstockes 2 herausbewegt wird, wenn die Kolbenvorrichtung 10 betätigt wird.

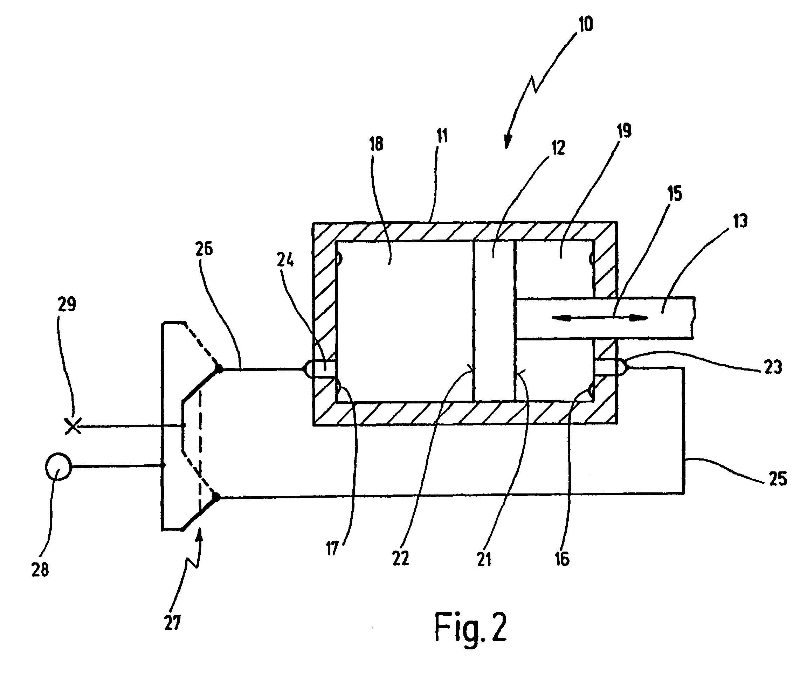

In Fig. 2 ist die Kolbenvorrichtung 10 schematisch und im Schnitt dargestellt. Dort sind zunächst zwei Endanschläge 16, 17 gezeigt, durch die der Hub 15 des Kolbens 12 in seinen Endpositionen abgefangen wird.

Zwischen dem Kolben 12 und dem Endanschlag 17 ist eine erste Druckkammer 18 ausgebildet, während zwischen dem Kolben 12 und dem Endanschlag 16 eine zweite Druckkammer 19 vorhanden ist. Der Kolben 12 zeigt mit seinen gegenüberliegenden Stirnseiten 21 und 22 auf die Druckkammern 19 bzw. 18 zu, deren Volumen sich beim Verschieben des Kolbens 12 entsprechend verändert.

In die Druckkammer 19 führt ein Ein- und Auslaß 23, während in die Druckkammer 18 ein Ein- und Auslaß 24 führt. Die Einund Auslässe 23, 24 sind über Fluidleitungen 25, 26 mit einem schematisch dargestellten Mehrwegeventil 27 verbunden, über das die Fluidleitungen 25, 26 abwechselnd und wahlweise mit einer Mediumsguelle 28 bzw. einem Ventil 29 verbindbar sind.

In der in Fig. 2 gezeigten Schaltstellung des Mehrwegeventils 27 speist die Mediumsquelle 28 über die Fluidleitung 25 Betätigungsmedium durch den Ein- und Auslaß 23 in die Druckkammer 19, wo die Stirnseite 21 des Kolbens 12 mit dem Betätigungsmedium beaufschlagt wird. Durch diese Beaufschlagung wird der Kolben 12 in Fig. 2 nach links bewegt, wodurch das Volumen der linken Druckkammer 18 allmählich reduziert wird.

Da auch die Druckkammer 18 von einem vorherigen Hub des Kolbens 12 in Fig. 2 nach rechts mit Betätigungsmedium gefüllt ist, entweicht dieses Betätigungsmedium jetzt über den Ein- und Auslaß 24 sowie die nachgeschaltete Fluidleitung 26 durch die Umschaltvorrichtung 27 aus dem Ventil 29.

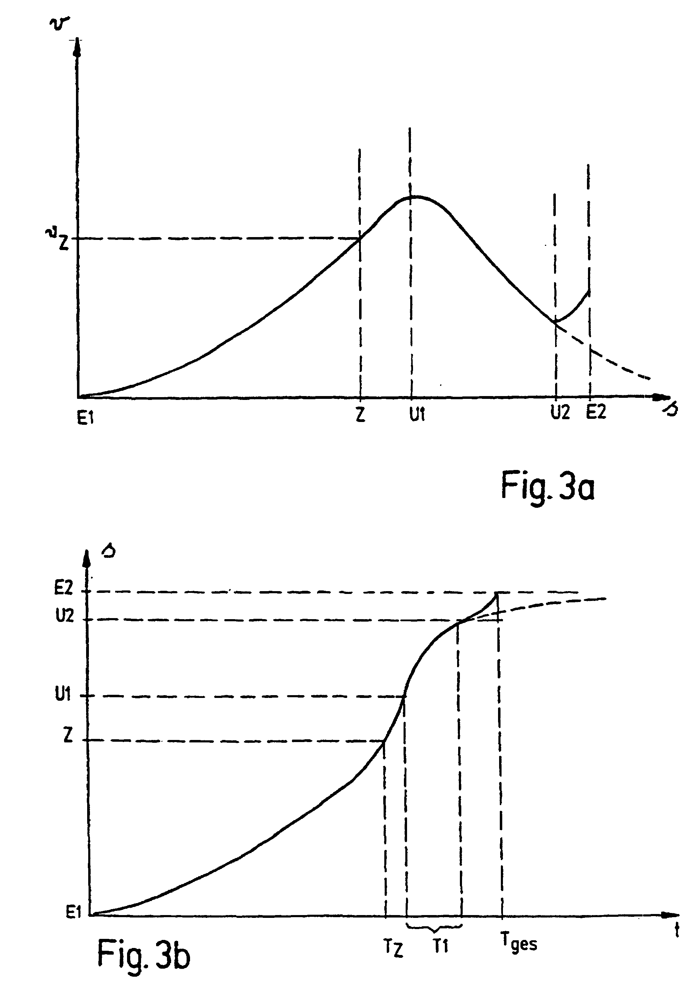

An Hand der Figuren 3a und 3b soll jetzt das neue Verfahren beschrieben werden, das verwendet wird, um die Vorrichtung 3 aus Fig. 1 einerseits einen sehr schnellen Hub 15 ausführen zu lassen, andererseits aber zu verhindern, daß bei dem Anschlagen des Kolbens 12 an die Endanschläge 16, 17 starke Erschütterungen auftreten. Fig. 3a zeigt dazu den Verlauf der Geschwindigkeit v über der Strecke s und Fig. 3b den verlauf des zurückgelegten Wegs s über der Zeit t.

Es sei angenommen, daß sich der Kolben 12 in Fig. 2 ganz rechts befindet, wo er mit seiner Stirnseite 21 an dem Endanschlag 16 anliegt. Diese Positionen sind in den Figuren 3a und 3b mit Endposition E1 bezeichnet.

Das Mehrwegeventil 27 wird jetzt so geschaltet, wie es in Fig. 2 ersichtlich ist, so daß das Betätigungsmedium auf die Stirnseite 21 drückt und den Kolben 12 in Fig. 2 nach links beschleunigt. Die Geschwindigkeit v (Fig. 3a) sowie der ab der Endposition E1 zurückgelegte Weg (s) nehmen nun linear bzw. exponentiell zu, da der Kolben 12 beschleunigt wird.

Wenn der Kolben 12 eine erste Umschaltposition U1 erreicht hat, die bei ca. 2/3 des gesamten Hubes 15 liegt, wird das Mehrwegeventil 17 umgeschaltet, so daß nunmehr die'der Stirnseite 21 entgegenwirkende Stirnseite 22 mit dem Betätigungsmedium beaufschlagt wird, während die Druckkammer 19 an der Stirnseite 21 über das Ventil 29 entlüftet wird. In der Druckkammer 18 baut sich nun ein Gegendruck auf, der den Kolben 12 schlagartig abbremst, seine Geschwindigkeit nimmt also stark ab, wie es aus Fig. 3a ersichtlich ist. Dennoch bewegt sich der Kolben 12 weiter in Richtung auf seine zweite Endposition E2 zu; in der die Stirnseite 22 in Anlage mit dem Endanschlag 17 sein wird. Dies ist in Fig. 3b gezeigt, wo zu erkennen ist, daß der Kolben 12 zwar weiter verfährt, jedoch mit immer langsamer werdender Geschwindigkeit.

Wenn jetzt die Umschaltposition U2 erreicht ist wird das Mehrwegeventil 27 wieder in die in Fig. 2 gezeigte Stellung geschaltet, so daß die Stirnseite 21 wieder mit dem Betätigungsmedium beaufschlagt und der Kolben 12 in Fig. 2 nach links beschleunigt wird. Entsprechend nimmt die Geschwindigkeit v des Kolbens 12 wieder zu, was in Fig. 3a zu sehen ist. Auch der zurückgelegte Weg s nimmt wieder exponentiell zu, bis schließlich die Endposition E2 erreicht wird, wo die Stirnseite 22 in Anlage mit dem Endanschlag 17 ist und der Kolben 12 dadurch gestoppt wird.

Der Vorteil des erneuten Umscbaltens des Mehrwegeventils 27 bei der zweiten Umschaltposition U2 ist aus Fig.3b zu erkennen, wo gestrichelt der wegverlauf angedeutet ist, den der Kolben 12 nehmen würde, wenn nicht bei U2 wieder auf Beschleunigen in Richtung E2 umgeschaltet würde. Entsprechend ist in Pig.3a der Verlauf der Geschwindigkeit v für den Fall gezeigt, daß bei U2 das Mehrwegeventil 27 nicht umgeschaltet wird.

Es ist zu erkennen, daß die Endposition E2 deutlich später erreicht würde, wenn auf dieses erfindungsgemäße erneute Umschalten des Mehrwegeventils 27 verzichtet würde.

Wegen des gezielten Abbremsens in dem Verfahrbereich zwischen U1 und U2 kann jetzt der Kolben 12 von E1 mit einer deutlich höheren Beschleunigung in Richtung E2 getrieben werden, als dies ohne das erfindungsgemäße Umschalten bei den Umschaltpositionen U1 und insbesondere U2 möglich wäre. Dadurch wird jetzt zum einen der Hub 15 deutlich schneller durchlaufen, während zum anderen dennoch für ein sanftes Abbremsen im Bereich der Endanschläge 16, 17 gesorgt wird. Die restliche Geschwindigkeit, die der Kolben 12 bei Erreichen der Position E2 hat, bzw. die Bewegungsenergie der Vorrichtung 3 wird durch den Endanschlag 17 vernichtet, ohne daß es zu stärkeren Erschütterungen kommt.

Alternativ können die Endanschläge 16, 17 selbstverständlich auch als Stoßdämpfer ausgebildet sein, die die Bewegungsenergie absorbieren.

Die Umschaltposition U2 wird hier dynamisch dadurch definiert, daß bei Erreichen der Umschaltposition U1 für eine bestimmte Zeitspanne T1, die hier 10 - 15 % der für den gesamten Hub benötigten Zeit T_{ges} betragen soll, die Stirnseite 22 mit dem Becätigungsmedium beaufschlagt wird. Das bedeutet, daß die Umschaltposition U2 in Abhängigkeit von der Geschwindigkeit, die der Kolben 12 bei Erreichen der Umschaltposition U1 hat, mehr oder weniger weit auf den Endanschlag E2 zuläuft. Je langsamer sich der Kolben 12 bei Erreichen der Umschaltposition U1 bewegt, desto weiter rückt die Umschaitposition U2 von der Endposition E2 weg, so daß also mehr Strecke und Zeit verbleibt, um den Kolben 12 von der Umschaltposition U2 in die Endposition E2 noch einmal zu beschleunigen.

Schließlich ist es auch noch möglich, die Umschaltposition U1 dynamisch zu definieren, wozu bei Erreichen einer Zwischenposition Z die bis dahin verstrichene Zeit T_{z} bzw. die aktuelle Geschwindigkeit v_{z} dazu verwendet wird, die genaue Lage der Umschaltposition U1 zu bestimmen. Je größer T_{z} bzw. je kleiner v_{z} ist, desto weiser kann die Umschaltposition U1 zu der Endposition E2 hin verschoben werden.

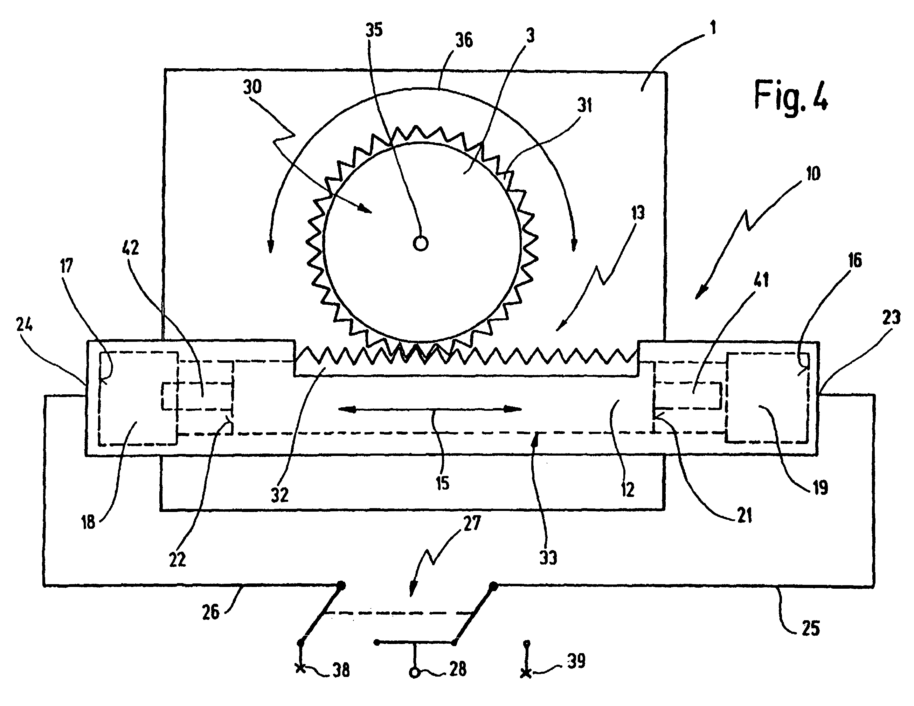

In Fig. 4 ist schließlich noch ein weiteres Ausführungsbeispiel für die Vorrichtung 3 sowie die Kolbenvorrichtung 10 aus Fig. 1 bzw. 2 gezeigt.

Gemäß Fig. 4 ist die Vorrichtung 3 ein Drehtisch mit einer Verzahnung 31, die mit einer Verzahnung 32 zusammenwirkt, die an dem Kolben 12 ausgebildet ist, der in diesem Falle eine Zahnstange 33 ist. Durch Verschieben der Zahnstange 33 längs des Hubes 15 dreht sich der Drehtisch 33 um eine Schwenkachse 35 hin und her, wie es durch einen Pfeil 36 angedeutet ist.

Die Kolbenvorrichtung 10 weist wieder zwei einander entgegenwirkende Stirnseiten 21, 22, zwei Druckkammern 18, 19 sowie zwei Endanschläge 16, 17 auf. Ferner ist wieder ein Mehrwegeventil 27 vorgesehen, bei dem jetzt jedoch zwei Ventile 38, 39 vorhanden sind, um die Druckkammern 18 bzw. 19 gesondert zu entlüften.

wenn die in Fig. 3 ebenfalls mit 1 bezeichnete und dort schematisch dargestellte Werkzeugmaschine so betrieben wird, wie dies an Hand der Figuren 3a und 3b für die Vorrichtung 3 aus Fig. 1 oben beschrieben wurde, dann liegt die erste Umschaltposition vorteilhafterweise bei 120° der Drehung des Drehtisches 30, während die erste Zeitspanne T1 12 % von T_{ges} beträgt. Es wurde festgestellt, daß für übliche Drehtische von Werkzeugmaschinen diese beiden Vorgaben zum einen ein sehr schnelles Verdrehen von ca. 1,5 s und zum anderen ein relativ stoßfreies Abfangen in den Endpositionen E1 und E2 ermöglicht.

Um die Bewegungsenergie in den Endpositionen E1 und E2 zu absorbieren, weist die Zahnstange 33 gemäß Fig. 4 noch zwei Stoßdämpfer 41, 42 auf, die an die Endanschläge 16 bzw. 17 anschlagen und in der Zahnstange 33 versinken.

Das neue Verfahren arbeitet in großen Bereichen unabhängig von dem Gewicht, das auf dem Drehtisch 30 lastet. weil nämlich die zweite Umschaltposition U2 dynamisch durch eine vorgegebene Zeitspanne für das gezielte Gegenbelüften vorgegeben wird, verschiebt sie sich je nach Geschwindigkeit des Drehtisches 30 bei Erreichen der Umschaltposition 1 von der Endposition E2 weg oder zu dieser hin.

## Patentansprüche

1. Verfahren zum Betreiben oder Ansteuern einer Werkzeugmaschine (1), die eine Vorrichtung (3) aufweist, die durch eine mediumsbetätigte Kolbenvorrichtung (10) betätigt wird, die zwischen zwei Endpositionen (E1, E2) einen durch Endanschläge (16, 17) begrenzten Hub (15) ausführt und mit einem Abtriebsglied (13) zur Übertragung des Hubes (15) auf die zu betätigende Vorrichtung (3) verbunden ist, mit den Schritten:
a) Eine erste Stirnseite (21) der Kolbenvorrichtung (10) wird so lange mit einem Betätigungsmedium beaufschlagt, bis die Vorrichtung (3) eine erste Umschaltposition (U1) erreicht hat,
b) danach wird eine der ersten Stirnseite (21)entgegenwirkende zweite Stirnseite (22) so lange mit dem Betätigungsmedium beaufschlagt, bis die Vorrichtung (3) eine zweite Umschaltposition (U2) eingenommen hat, wobei die Kolbenvorrichtung (10) zwar weiter verfährt, jedoch mit langsamer werdender Geschwindigkeit, und
c) dann wird wieder die erste Stirnseite (21) mit dem Betätigungsmedium beaufschlagt, um die Vorrichtung (3) in eine ihrer Endpositionen (E1, E2) zu bringen,
wobei die zweite Umschaltposition (U2) dynamisch dadurch bestimmt wird, daß ab Erreichen der ersten Umschaltposition (U1) eine erste Zeitspanne (T1) abgewartet wird, bevor wieder die erste Stirnseite (21) mit dem Betätigungsmedium beaufschlagt wird, und
wobei die erste Zeitspanne (T1) vorgegeben ist und 10 - 15 % der für den gesamten Hub (15) benötigten Zeit (T_{ges}) beträgt.

2. Verfahren nach Anspruch 1, **dadurch gekennzeichnet, daß** die erste Umschaltposition (U1) zwischen 50 und 75 %, vorzugsweise bei ca. 2/3 des Hubes (15) liegt.

3. Verfahren nach Anspruch 1, **dadurch gekennzeichnet, daß** die erste Umschaltposition (U1) dynamisch aus der Zeit (t) berechnet wird, die die Vorrichtung (3) benötigt, um eine Zwischenposition (Z) zwischen der anfänglichen Endposition (E2, E1) und der ersten Umschaltposition (U1) zu erreichen.

4. Verfahren nach Anspruch 3, **dadurch gekennzeichnet, daß** die Zwischenposition (Z) zwischen 40 und 60 %, vorzugsweise bei ca. 55 % des Hubes (15) liegt.

## Claims

1. A method for operating or activating a machine tool (1) having a device (3) that is actuated by a medium-actuated piston device (10) which executes a stroke (15), delimited by end stops (16, 17), between two end positions (E1, E2), and which is joined to a driven member (13) in order to transfer the stroke (15) to the device (3) being actuated, comprising the following steps:
a) a first end face (21) of the piston device (10) is acted upon by an actuation medium until the device (3) has reached a first changeover position (U1),
b) a second end face (22) acting against the first end face (21) is then acted upon by the actuation medium until the device (3) has assumed a second changeover position (U2), wherein the piston device (10) continues to travel but with decreasing speed, and
c) the first end face (21) is then acted upon by the actuation medium in order to bring the device (3) into one of its end positions (E1, E2),
wherein the second changeover position (U2) is determined dynamically, by the fact that once the first changeover position (U1) is reached, a first time interval (T1) is allowed to elapse before the first end face (21) is again acted upon by the actuation medium, and
wherein the first time interval (T1) is predefined, and is 10 - 15 % of the time (T_{ges}) required for the entire stroke (15).

2. The method as defined in claim 1, **characterized in that** the first changeover position (U1) is located at between 50 and 75 %, preferably at approximately two-thirds, of the stroke (15).

3. The method as defined in claim 1, **characterized in that** the first changeover position (U1) is calculated dynamically from the time (t) required for the device (3) to reach an intermediate position (Z) between the original end position (E1 E2) and the first changeover position (U1).

4. The method as defined in claim 3, **characterized in that** the intermediate position (Z) is located at between 40 and 60 %, preferably at approximately 55 %, of the stroke (15).

## Revendications

1. Procédé pour faire fonctionner ou commander une machine-outil (1) qui comporte un dispositif (3), lequel est actionné par un dispositif à piston (10), actionné au moyen d'un fluide et qui exécute une course (15) limitée par deux butées terminales (16, 17), entre deux positions terminales (E1, E2), et qui est relié à un organe de sortie (13) pour transmettre la course (15) au dispositif (3) à actionner, comportant les étapes suivantes :
a) un premier côté frontal (21) du dispositif à piston (10) est soumis à l'action d'un fluide d'actionnement jusqu'à ce que le dispositif (3) atteigne une première position de commutation (U1),
b) après cela, un deuxième côté frontal (22), agissant à l'encontre du premier côté frontal (21), est soumis à l'action du fluide d'actionnement jusqu'à ce que le dispositif (3) prenne une deuxième position de commutation (U2), le dispositif à piston (10) continuant certes de se déplacer mais avec une vitesse décroissante, et
c) le premier côté frontal (21) est alors à nouveau soumis à l'action du fluide d'actionnement pour amener le dispositif (3) dans l'une de ses positions terminales (E1, E2), la deuxième position de commutation (U2) étant déterminée de manière dynamique par le fait qu'à partir du moment où la première position de commutation (U1) est atteinte, on attend un premier laps de temps (T1) avant que le premier côté frontal (21) ne soit à nouveau soumis à l'action du fluide d'actionnement, et
le premier laps de temps (T1) étant prédéfini et représentant 10 à 15 % du temps (T_{ges}) nécessaire pour toute la course (15).

2. Procédé selon la revendication 1, **caractérisé en ce que** la première position de commutation (U1) se situe entre 50 et 75 %, de préférence à environ 2/3 de la course (15).

3. Procédé selon la revendication 1, **caractérisé en ce que** la première position de commutation (U1) est calculée de manière dynamique à partir du temps (t) dont le dispositif (3) a besoin pour atteindre une position intermédiaire (Z) entre la position terminale (E2, E1) initiale et la première position de commutation (U1).

4. Procédé selon la revendication 3, **caractérisé en ce que** la position intermédiaire (Z) se situe entre 40 et 60 %, de préférence à environ 55 % de la course (15).
